Europäisches Patentamt

European Patent Office

Office européen des brevets

(11) Veröffentlichungsnummer: **0 151 752**
**A2**

(12) **EUROPÄISCHE PATENTANMELDUNG**

(21) Anmeldenummer: **84115376.0**

(22) Anmeldetag: **13.12.84**

(51) Int. Cl.⁴: **G 01 N 21/73**

(30) Priorität: **13.02.84 DE 3405075**

(43) Veröffentlichungstag der Anmeldung:
**21.08.85 Patentblatt 85/34**

(84) Benannte Vertragsstaaten:
**BE CH DE FR GB LI NL**

(71) Anmelder: **Siemens Aktiengesellschaft**
**Berlin und München Wittelsbacherplatz 2**
**D-8000 München 2(DE)**

(72) Erfinder: **Kunze, Harald**
**Hans-Geiger-Strasse 3**
**D-8520 Erlangen(DE)**

(54) **Vorrichtung zur Atomspektroskopie einer Analysensubstanz.**

(57) Vorrichtung zur Atomspektroskopie einer Analysensubstanz mit einem Gasplasma als Anregungsquelle. Die Anordnung hat zwei Heizzonen. Eine erste Heizzone (1) zum Vorheizen des Plasmagases (4) und der Probe (3) und eine zweite Heizzone (2) zur Erzeugung des Plasmas (10). Die in der heißen Plasmazone auftretende Lichtemission dient der spektralanalytischen Auswertung.

Siemens Aktiengesellschaft     Unser Zeichen
Berlin und München             VPA 84 P 3 0 4 6 E

Vorrichtung zur Atomspektroskopie einer Analysensubstanz

Die Erfindung betrifft eine Vorrichtung zur Atomspektroskopie einer Analysensubstanz mit einem Gasplasma als
Anregungsspule und spektralanalytischer Auswertung der
in der heißen Plasmazone auftretenden Lichtemission.

Bei den bekannten Vorrichtungen zur Atomspektroskopie,
die mit einem Gasplasma als Anregungsquelle arbeiten,
wird die Analysensubstanz vorzugsweise in Form eines
Aerosols der Probenlösung in das Gasplasma eingebracht
und die in der heißen Zone des Plasmas dann auftretende
Lichtemission der dort befindlichen Elemente spektralanalytisch ausgewertet durch photochemische Messung der
Linienintensität oder über die Schwärzung einer Fotoplatte.

Das als Plasmagas dienende Argon wird üblicherweise mit
Raumtemperatur in den Brenner eingeführt. Erst in der
Heizzone der Plasmazone, z.B. beim ICP=induktiv gekoppeltem Plasma auf der Höhe der Induktionsspule, erfolgt die Energieübertragung auf das Gas. Dabei muß das
strömende Gas von Raumtemperatur bis auf die Temperatur
des Gasplasmas aufgeheizt werden. Hierbei entsteht ein
starkes Temperaturgefälle und es bilden sich Temperaturprofile aus, die in der Gasströmung schwingen. Das aus
dieser Zone in die Optik des Spektralgerätes einfallende
Licht ergibt auch eine unruhige Messung.

Td 2 Gr / 08.02.1984

Durch das Hineinbringen der Analysensubstanz in die Heizzone laufen dort noch weitere Vorgänge ab wie das Aufheizen des Trägergasstromes, das Verdampfen des Lösungsmittels, das Verdampfen der gelösten Substanzen und das weitere Aufheizen bis zur Atomisierung, so daß hierdurch das Plasma noch unruhiger wird, sich die Temperaturprofile wieder verändern und die vom Plasma ausgehende Lichtemission der Elemente ebenfalls unruhiger wird.

Aufgabe der Erfindung ist es die Plasmazone zu beruhigen und die Meßgenauigkeit bei der analytischen Auswertung der Atomemission zu verbessern. Die Vorrichtung soll ferner die analytische Auswertung der Atomabsorption ermöglichen und die Verwendung der erzeugten Atomemission als Lichtquelle für die Atomabsorptionsspektralfotometrie.

Diese Aufgabe wird erfindungsgemäß gelöst mit einer Vorrichtung mit einer ersten Heizzone, in welcher die Vorheizung des Plasmagases und der zugeführten Probe erfolgt und einer zweiten Heizzone, in der ein Plasma erzeugt wird.

In der ersten Heizzone wird bis zur Atomisierung der zugeführten Probe aufgeheizt. Das vorgeheizte Gemisch von Plasmagas und atomisierter Probensubstanz besitzt eine hohe Temperatur. Es tritt nun nach Passieren eines Zwischenbereiches als weitgehend homogenisiertes Gasgemisch von gleichmäßiger Temperatur in die zweite Heizzone ein. Hier wird ein Gasplasma erzeugt (ICP). Das Plasma brennt äußerst ruhig und es bildet sich eine wesentlich ruhigere und stabilere Lichtemission aus, als bei bekannten Plasmabrennern. Die Meßgenauigkeit für die

0151752

Lichtemission ist verbessert. Die sich zwischen den zwei Heizzonen ergebenden Temperaturabschnitte, in denen die Elemente vorwiegend als Atome im Grundzustand oder in angeregtem Zustand vorliegen, können durch die Verwendung eines entsprechend ausgeformten Quarzbrenners und mit einem für die Atomemissionsspektralanalyse (AES) und Atomabsorptionsspektralanalyse (AAS) ausgelegten Spektralphotometer analytisch ausgenutzt werden. Die erzeugten Atomemissionen von reinen Elementen können als Lichtquelle für die Atomabsorptionsspektralanalyse in einem kombinierten Gerät oder als eigenständige Lichtquelle für herkömmliche Atomabsorptionsspektralphotometer eingesetzt werden.

Die Aufheizung in der ersten Heizzone kann durch eine elektrische Widerstandsheizung mittels eines außen oder innen angebrachten induktiv beheizten Graphitringes oder auch durch ein Argonplasma kleinerer Leistung (DC oder ICP ~ 0,5 bis 1,5 kW) erfolgen. Es kann bis zur Gasphase oder bis zur Atomisierung erhitzt werden.

In der zweiten Heizzone kann ein Ar/Ar-Plasma oder ein $Ar/N_2$-Plasma als Energiequelle dienen.

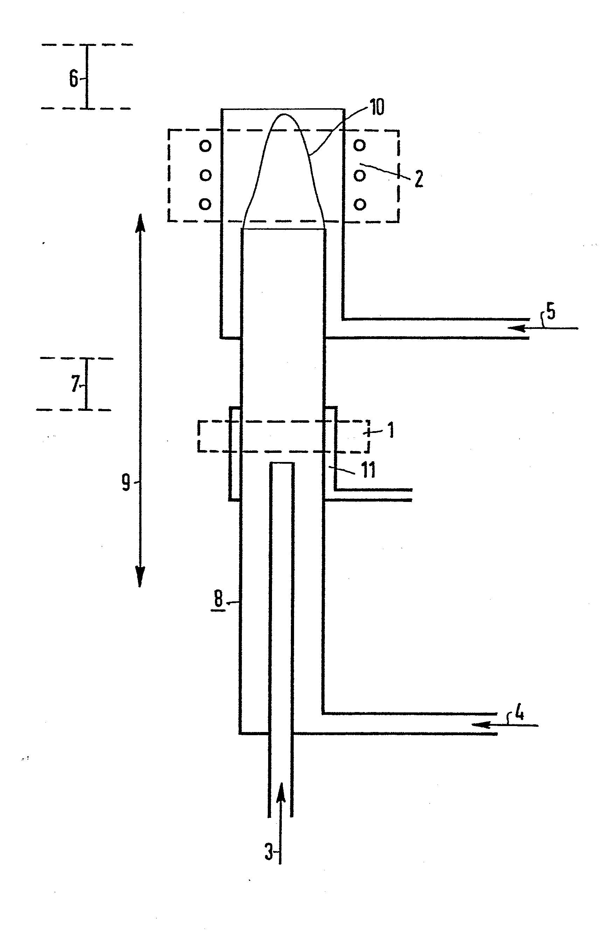

Im folgenden ist die Erfindung in einem bevorzugten Ausführungsbeispiel anhand der Zeichnung näher erläutert.

In eine Quarzapparatur gemäß der Figur wird in der ersten Heizzone 1 die zugeführte Analysenprobe 3 - meist als Aerosol oder Partikel mit einem Trägergasstrom von Argon - mit dem Plasmagasstrom 4 zusammen bis zur Gasphase oder auch bis zur Atomisierung aufgeheizt.

0151752

Wird bis zur Bildung von Atomen im Grundzustand oder im angeregten Zustand erhitzt - z.B. durch ein Argonplasma, so kann in der Meßzone 7 durch Atomabsorptionsspektralfotometrie die analytische Auswertung erfolgen.

Das in der ersten Heizzone auf hohe Temperatur gebrachte Gemisch von Plasmagas und Probe, tritt dann schon weitgehend homogenisiert in die zweite Heizzone 2 ein. Das hier erzeugte Gasplasma ist besonders stabil. Mit 5 ist die Kühlgaszufuhr für das Hauptplasma 10 bezeichnet. In der Meßzone 6 erfolgt die analytische Auswertung durch Atomemissionsspektralfotometrie.

Mittels Höhenverstellung 9 kann die jeweils optimale Zone zur Messung von AES oder AAS auf den Eintrittsspalt des Spektralapparates eingestellt werden.

Auf der Höhe der Heizzone 1 ist eine Mantelkühlung 11 zur Kühlung der Brennerwandung des Brenners 8 angebracht.

Mit einer Vorrichtung gemäß der Erfindung können Analysen zur Bestimmung von chemischen Elementen nach dem Verfahren der Atomemissionsspektroskopie mit verbesserter Meßgenauigkeit ausgeführt werden.

3 Patentansprüche

1 Figur

- 5 -   VPA 84 P 30 46 E

Patentansprüche

1. Vorrichtung zur Atomspektroskopie einer Analysensubstanz mit einem Gasplasma als Anregungsquelle und spektralanalytischer Auswertung der in der heißen Plasmazone auftretenden Lichtemission, g e k e n n z e i c h - n e t durch eine erste Heizzone (1), in welcher die Vorheizung des Plasmagases (4) und der zugeführten Probe (3) erfolgt und einer zweiten Heizzone (2), in der ein Plasma (10) erzeugt wird.

2. Vorrichtung nach Anspruch 1, d a d u r c h   g e - k e n n z e i c h n e t , daß im Bereich der ersten Heizzone (1) eine Mantelkühlung (11) vorgesehen ist.

3. Vorrichtung nach Anspruch 1 oder 2, d a d u r c h g e k e n n z e i c h n e t , daß eine Meßzone (1) und (2) für eine analytische Auswertung nach dem Verfahren der Atomabsorptionsspektrometrie (AAS) verwendet wird.